# EUROPÄISCHE PATENTANMELDUNG

(11) **EP 2 636 978 A1**
(43) Veröffentlichungstag der Anmeldung: **11.09.2013**
(21) Anmeldenummer: 12158182.1
(22) Anmeldetag: 06.03.2012
(51) Int. Cl.: F27B 3/28, F27D 11/10, F27D 19/00, F27D 21/00, C21C 5/52, H05B 7/10

(54) **Verfahren zum Betreiben eines Lichtbogenofens und Schmelzanlage mit einem nach diesem Verfahren betriebenen Lichtbogenofen**

(71) Anmelder: Siemens Aktiengesellschaft, 80333 München (DE)
(72) Erfinder: Backes, Ralph-Herbert, 91056 Erlangen (DE)

(57) **Zusammenfassung**

Bei einem Verfahren zum Betreiben eines Lichtbogenofens (2) mit zumindest einer Elektrode (6) sowie bei einer Schmelzanlage mit einem nach diesem Verfahren betriebenen Lichtbogenofen (2) wird eine Bewegung der Elektrode (6) erfasst und ein dieser Bewegung entsprechendes Bewegungssignal (M) erzeugt und das zum Steuern zumindest einer Prozessgröße des Lichtbogenofens (2) herangezogen.

## Beschreibung

Die Erfindung bezieht sich auf ein Verfahren zum Betreiben eines Lichtbogenofens. Außerdem bezieht sich die Erfindung auf eine Schmelzanlage mit einem nach diesem Verfahren betriebenen Lichtbogenofen.

In einem Lichtbogenofen wird stückiges Schmelzgut, in der Regel Metallschrott, gegebenenfalls zusammen mit weiteren Zuschlagstoffen durch einen zwischen dem Schmelzgut und mindestens einer Elektrode gezündeten Lichtbogen aufgeschmolzen.

Dabei hat sich gezeigt, dass Lichtbogenöfen unerwünschte Netzrückwirkungen wie Oberwellen oder den sogenannten Flicker erzeugen.

Um solche Netzrückwirkungen zu reduzieren und gegebenenfalls die in der Regel von Energieversorgungsunternehmen vorgeschriebenen Grenzwerte einzuhalten, sind in Stahlwerken Kompensationsanlagen, sogenannte SVC-Systeme oder statische Blindleistungskompensatoren, installiert. Solche SVC-Systeme reagieren im Nachgang auf eine bereits erzeugte Netzstörung, d.h. auf die im Lichtbogenofen beim Schrotteinschmelzen erzeugten Oberwellen oder Flicker, und können, insbesondere dann, wenn die Lichtbogenöfen an schwachen Versorgungsnetzen betrieben werden, ein Einhalten der vorgeschriebenen Grenzwerte nicht immer sicherstellen.

Ursache für das Auftreten solcher Netzrückwirkungen sind hohe und schnelle Schwankungen des Lichtbogenstromes, die durch Instabilitäten des Lichtbogens, d.h. Änderungen seiner Lage und Länge, hervorgerufen werden. Solche Längenänderungen werden einerseits durch starke Bewegung des schmelzenden Schrotts (Schrottbewegungen und Schrotteinstürze) und andererseits durch die Anwesenheit von grobstückigem Schwerschrott unter dem Lichtbogen verursacht. Im ersten Fall rutscht neuer, kalter Schrott unter die Elektroden und der Lichtbogen muss je nach Bedingungen heftig und schnell nachjustiert werden, so dass sich der Strom und die Brennbedingung abrupt ändern. Im zweiten Fall brennt, der Lichtbogen instabil und mit fluktuierendem Fußpunkt.

Der Erfindung liegt nun die Aufgabe zu Grunde, ein Verfahren zum Betreiben eines Lichtbogenofens anzugeben, mit dem es möglich ist, das das Auftreten oder Ausmaß solcher durch Instabilitäten des Lichtbogens erzeugten Netzrückwirkungen zu verringern. Außerdem liegt der Erfindung die Aufgabe zu Grunde, eine Schmelzanlage mit einem nach diesem Verfahren betriebenen Lichtbogenofen anzugeben.

Hinsichtlich des Verfahrens wird die genannte Aufgabe gemäß der Erfindung gelöst mit einem Verfahren mit den Merkmalen des Patentanspruches 1. Gemäß diesen Merkmalen wird bei einem Lichtbogenofen mit zumindest einer Elektrode eine Bewegung der Elektrode erfasst und ein dieser Bewegung entsprechendes Bewegungssignal erzeugt, das zum Steuern zumindest einer Prozessgröße des Lichtbogenofens herangezogen wird. Unter Prozessgröße ist dabei eine einstellbare physikalische Größe zu verstehen, die entweder unmittelbar den im Lichtbogenofen stattfindenden Schmelzprozess, insbesondere die Elektrodenspannung, der Elektrodenstrom sowie die Höhenposition der Elektrodenspitze, oder die Rückwirkungen auf das Netz, insbesondere das Ausmaß der Blindleistung oder das Auftreten von Flickern beeinflusst.

Die Erfindung liegt dabei die Überlegung zugrunde, dass die unerwünschten Netzrückwirkungen wesentlich hervorgerufen sind durch eine schnelle Änderung der Länge des zwischen der Spitze der Elektrode Lichtbogens und dem Schrott bzw. der Schmelze brennenden Lichtbogens. Die Erfindung beruht außerdem auf der Erkenntnis, dass eine Änderung dieser Lichtbogenlänge bzw. der Eigenschaften des Lichtbogens nicht nur durch Schrottbewegungen sondern auch durch eine Bewegung der Elektrode selbst verursacht werden, die wiederum durch die auf der Elektrode wirkenden elektrodynamischen Kräfte verursacht ist. Mit anderen Worten: Eine Bewegung der Elektrode ist ein weiterer Indikator für eine Änderung der Eigenschaften des Lichtbogens, insbesondere für eine Änderung der Lichtbogenlänge. Durch die erfindungsgemäße Maßnahme kann demzufolge ein die Eigenschaften des Lichtbogens beinflussender Parameter erfasst werden, der zum Steuern einer Prozessgröße des Lichtbogenofens herangezogen werden kann.

Vorzugsweise wird die Bewegung der Elektrode mit zumindest einem an einem Tragarm der zumindest einen Elektrode angeordneten Bewegungssensor erfasst.

Grundsätzlich ist es in einer alternativen oder ergänzenden Ausgestaltung des Verfahrens auch möglich, eine Bewegung der Elektrode durch eine Messung und Analyse der an der Elektrode anliegenden Spannung und/oder des durch die Elektrode fließenden Stromes zu erfassen, da eine Bewegung der Elektrode mit einer Variation der Länge des Lichtbogens einhergeht, die wiederum eine Änderung des im Lichtbogen fließenden Stromes und der an der Elektrode anliegenden Spannung bewirkt. Diese Änderungen sind der Grundfrequenz von 50 Hz überlagert, so dass ein der Bewegung der Elektrode entsprechendes Bewegungssignal aus einem im Stromkreis der Elektrode fließenden Strom- bzw. einem beispielsweise auf der Primärseite eines Ofentransformators anliegenden Spannungssignales abgeleitet werden kann.

In einer besonders vorteilhaften Ausgestaltung des Verfahrens wird aus dem bis zu einem Zeitpunkt tᵢ in einem vorgegebenen Zeitintervall Δt gemessenen zeitlichen Verlaufs des Bewegungssignals ein die zukünftige Bewegung der zumindest einen Elektrode wiedergebendes Vorhersagesignal abgeleitet, das zum Steuern der zumindest einen Prozessgröße herangezogen wird. Diese Maßnahme beruht auf der Überlegung, dass die Bewegung der Elektrode neben stochastischen Anteilen insbesondere bei einer mit einer Wechselspannung betriebenen Elektrode auch harmonische Anteile zugrunde liegen, die in gewissen Grenzen eine Prädiktion oder Vorhersage der zukünftigen Bewegung der Elektrode bzw. der Elektrodenspitze ermöglichen. Dies ermöglicht wiederum eine prädiktive Steuerung der zumindest einen Prozessgröße, so dass auf diese Weise eine präventiv wirkende Vorsteuerung dieser Prozessgröße erfolgen kann und das Auftreten von Flickern oder das Ausmaß der in das Netz zurückgespeisten Blindleistung von vornherein unterdrückt oder verringert werden kann.

Hinsichtlich der Schmelzanlage wird die Aufgabe gemäß der Erfindung gelöst mit den Merkmalen des Patentanspruches 4, die sinngemäß den in Patentanspruch 1 angegebenen Merkmalen entsprechen. Vorteilhafte Ausgestaltungen der Schmelzanlage sind in den auf diesen bezogenen Unteransprüchen angegeben.

Zur weiteren Erläuterung der Erfindung wird auf die in den Figuren dargestellten Ausführungsbeispiele verwiesen. Es zeigen:
Fig. 1 eine Schmelzanlage gemäß der Erfindung in einem Prinzipschaltbild,
Fig. 2 einen Lichtbogenofen mit einer Einrichtung zum Erfassen der Bewegung einer Elektrode gemäß der Erfindung ebenfalls in einer schematischen Prinzipdarstellung,
Fig. 3 eine schematische Darstellung eines dreiphasigen Elektrodensystems in einem Querschnitt senkrecht zur Längsachse der Elektroden,
Fig. 4 ein Diagramm, in dem ein die Bewegung der Elektrode wiedergebendes Bewegungssignal gegen die Zeit aufgetragen ist.

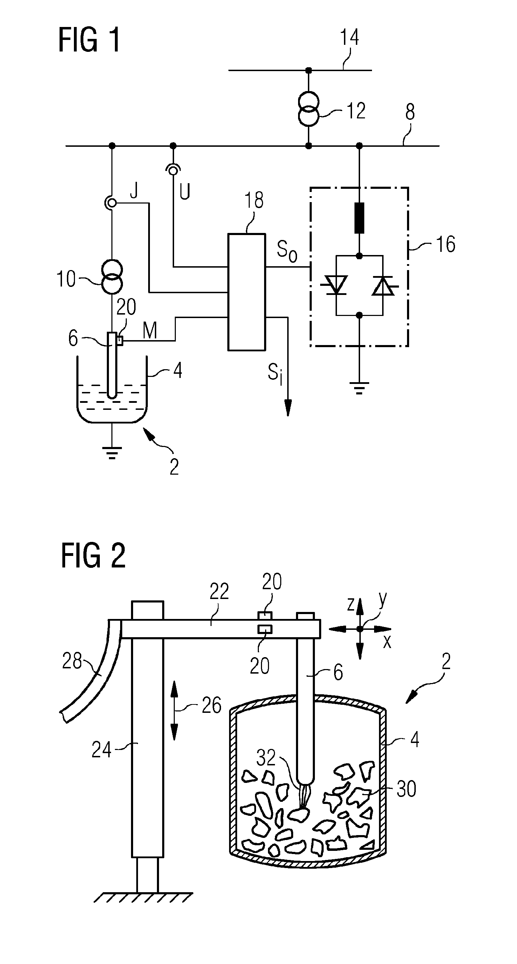

Gemäß Figur 1 umfasst die Schmelzanlage einen Lichtbogenofen 2 mit einem mit Schrott bestückten Ofengefäß 4, in dem sich zumindest eine Elektrode 6 befindet. Die Elektrode 6 wird über einen an ein Zwischennetz 8 angeschlossenen Ofentransformator 10 mit Strom versorgt. Dieses Zwischennetz 8 ist über einen Netztransformator 12 an ein Hochspannungsnetz 14 angeschlossen. An das Zwischennetz 8 ist ein schematisch durch eine Thyristorschaltung sowie eine Drossel angedeutetes SVC-System 16 angeschlossen, das zur Vermeidung oder Reduktion von Blindleistung und/oder Flickern dient.

Die Elektrode 6 ist mechanisch mit zumindest einem Bewegungssensor 20 zumindest mittelbar mechanisch gekoppelt, mit dem eine Bewegung der Elektrode 6 erfasst wird, und der ein Bewegungssignal M erzeugt und an die Steuer- und Auswerteeinrichtung 18 weiterleitet. Dieses Bewegungssignal M wird gemeinsam mit weiteren Eingangssignalen, beispielsweise die an der Primärseite des Ofentransformators anliegende Spannung U sowie den zum Ofentransformator 10 fließenden Strom I, in der Steuer- und Auswerteeinrichtung 18 ausgewertet und zum Erzeugen von Steuersignalen S₀, Sᵢ herangezogen, mit denen das SVC-System 16 bzw. weitere Prozessgrößen des Lichtbogenofens 2 gesteuert werden.

In der Steuer- und Auswerteeinrichtung 18 werden außerdem die im Stromkreis der Elektrode 6 anliegende Spannung U und/oder einem in diesem Stromkreis fließenden Strom I, im Beispiel die an der Primärseite des Ofentransformators anliegenden Spannung U sowie der zum Ofentransformator 10 fließende Strom I ausgewertet, um aus diesen durch Signalanalyse ein analytisches Bewegungssignal M abzuleiten. Dies kann ergänzend oder auch nach einer Lernphase anstelle des mit einem Bewegungssensor gemessenen Bewegungssignales M zum Steuern zumindest einer Prozessgröße des Lichtbogenofens 2 herangezogen werden. Dementsprechend kann der Bewegungssensor in diesem Fall auch entfallen.

Gemäß Figur 2 ist die Elektrode 6 über einen Tragarm 22 an einer Elektrodensäule 24 angeordnet, die ihrerseits in Richtung des Doppelpfeiles 26 relativ zum Ofengefäß 4 höhenverstellbar gelagert ist. Die Elektrode 6 wird über ein mit dem Ofentransformator 10 (Figur 1) verbundenen Hochstromseil 28 mit Strom versorgt, so dass zwischen der im Ofengefäß 4 befindlichen, im Beispiel als stückiger Schrott dargestellten Charge 30 ein Lichtbogen 32 brennt. Verursacht durch Fluktuationen des im Lichtbogen 32 fließenden Stroms, seiner Lage sowie seiner Länge, werden auf die Elektrode 6 elektrodynamische Kräfte ausgeübt, die zu ihrer Bewegung und damit zu einer Bewegung der Spitze der Elektrode führen, die wiederum Auswirkungen auf die Eigenschaften des Lichtbogens 32 hat. Zum Erfassen dieser Bewegungen sind am Tragarm 22 mehrere Bewegungssensor 20 angeordnet.

Als Bewegungssensor 20 sind beispielsweise Beschleunigungssensoren oder Dehnungsmessstreifen geeignet, mit denen eine Bewegung des Tragarms und damit mittelbar auch der Elektrodenspitze vorzugsweise in drei zueinander senkrechten Richtungen, veranschaulicht in x- und z-Richtung durch sowie in der zur Zeichenebene senkrechten y-Richtung erfasst werden können. Aus der Geometrie der Anordnung der Elektrode 6, das heißt aus der Länge des Tragarmes 22, der Position der Bewegungssensor 20 am Tragarm 22 und der Länge der Elektrode 6, die über Betriebsdauer, Elektrodenverbrauch und Elektroden-Nachsetzdaten abschätzbar ist, kann die Bewegung der Elektrodenspitze abgeleitet werden.

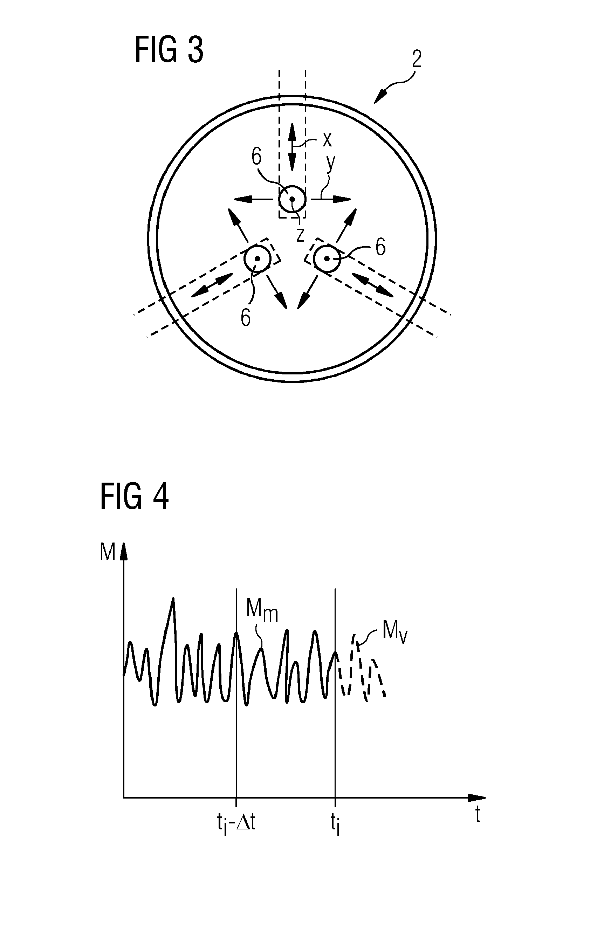

In der schematischen Darstellung gemäß Figur 3 ist eine Draufsicht auf einen mit Drehstrom betriebenen Lichtbogenofen 2 schematisch dargestellt. Drei Elektroden 6 sind an den Eckpunkten eines gleichschenkligen Dreiecks angeordnet. Mit Pfeilen bzw. einem Punkt sind die durch elektrodynamische Kräfte verursachten Bewegungen der Elektroden 6 dargestellt, wobei die Bewegungen im Wesentlichen in y- und z-Richtung erfolgen.

Im Diagramm der Figur 4 ist ein mit einem der an einer Elektrode zumindest mittelbar angeordneten Bewegungssensor aufgenommenes oder ein analytisch aus dem Strom I und/oder der Spannung U analytisch erzeugtes Bewegungssignal M gegen die Zeit t aufgetragen. Der Figur ist in diesem Beispiel zu entnehmen, dass neben statistischen Fluktuationen in diesem Beispielfall eine periodische Grundstruktur zu erkennen ist, deren Frequenz im wesentlichen ein Vielfaches einer Grundfrequenz beträgt, die wiederum von der Frequenz der Versorgungsspannung abhängt, so dass es möglich ist, aus dem in einem Zeitintervall Δt vor dem aktuellen Zeitpunkt tᵢ gemessenen zeitlichen Verlauf Mₘ des Bewegungssignals M ein die zukünftige Bewegung dieser Elektrode wiedergebendes Vorhersagesignal Mᵥ abgeleitet werden kann, mit dem es möglich ist, eine Prozessgröße des Lichtbogenofens prädiktiv zu steuern.

Eine solche Prädiktion der Bewegung der Elektrodenspitze ist dabei grundsätzlich auch möglich, wenn das Bewegungssignal M anders wie in Figur 4 dargestellt nicht ohne Weiteres erkennbare Regelmäßigkeiten aufweist.

Durch die Erfindung steht somit ein Parameter zur Verfügung, der zur Vorsteuerung der Automatik-Funktionen der Ofensteuerung und der Vorsteuerung des SVC zur Reduktion der Netzrückwirkungen verwendet werden kann.

## Patentansprüche

1. Verfahren zum Betreiben eines Lichtbogenofens (2) mit zumindest einer Elektrode (6), bei dem eine Bewegung der Elektrode (6) zumindest mittelbar erfasst und ein dieser Bewegung entsprechendes Bewegungssignal (M) erzeugt wird, das zum Steuern zumindest einer Prozessgröße des Lichtbogenofens (2) herangezogen wird.

2. Verfahren nach Anspruch 1,
bei dem zum Erfassen der Bewegung der zumindest einen Elektrode (6) zumindest ein an einem Tragarm (22) der Elektrode (6) angeordneter Bewegungssensor (20) verwendet wird.

3. Verfahren nach Anspruch 1 oder 2,
bei dem das der Bewegung der zumindest einen Elektrode (6) entsprechende Bewegungssignal (M) aus einem der Elektrode (6) fließenden Strom- bzw. einem in diesem Stromkreis anliegenden Spannungssignal (I,U) abgeleitet wird.

4. Verfahren nach Anspruch 1, 2 oder 3,
bei dem aus dem bis zu einem Zeitpunkt (tᵢ) in einem vorgegebenen Zeitintervall (Δt) gemessenen zeitlichen Verlauf (Mₘ) des Bewegungssignals (M) ein die zukünftige Bewegung der zumindest einen Elektrode (6) wiedergebendes Vorhersagesignal (Mᵥ) abgeleitet wird, das zum Steuern der zumindest einen Prozessgröße herangezogen wird.

5. Schmelzanlage mit einem Lichtbogenofen (2) mit zumindest einer Elektrode (6) sowie mit zumindest einem mechanisch an die Elektrode (6) zumindest mittelbar mechanisch gekoppelten Bewegungssensor (20) zum Messen einer Bewegung der Elektrode (6) sowie mit einer Steuer- und Auswerteeinrichtung (18) zum Steuern zumindest einer Prozessgröße des Lichtbogenofens (2) unter Heranziehung des vom Bewegungssensor (20) erzeugten Bewegungssignals (M).

6. Schmelzanlage nach Anspruch 5,
bei der der zumindest eine Bewegungssensor (20) an einem Tragarm (22) der zumindest einen Elektrode (6) angeordnet ist.

7. Schmelzanlage mit einem Lichtbogenofen (2) mit zumindest einer Elektrode (6) sowie mit einer Steuer- und Auswerteeinrichtung zum Ableiten eines der Bewegung der zumindest einen Elektrode (6) entsprechenden Bewegungssignales (M) aus einer im Stromkreis der Elektrode (6) anliegenden Spannung (U) und/oder einem in diesem Stromkreis fließenden Strom (I).

8. Schmelzanlage nach Anspruch 5, 6 oder 7,
bei der die Steuer- und Auswerteeinrichtung (18) zum Ableiten eines die zukünftige Bewegung der zumindest einen Elektrode (6) wiedergebenden Vorhersagesignals (Mᵥ) aus dem bis zu einem Zeitpunkt (tᵢ) in einem vorgegebenen Zeitintervall (Δt) gemessenen zeitlichen Verlauf (Mₘ) des Bewegungssignals (M) und zum Steuern der zumindest einen Prozessgröße unter Heranziehung dieses Vorhersagesignals (Mᵥ) eingerichtet ist.
